# EUROPÄISCHE PATENTSCHRIFT

(11) **EP 2 945 487 B1**
(45) Veröffentlichungstag und Bekanntmachung des Hinweises auf die Patenterteilung: **07.11.2018**
(21) Anmeldenummer: 14700409.7
(22) Anmeldetag: 14.01.2014
(51) Int. Cl.: A21C 3/04

(54) **VORRICHTUNG UND VERFAHREN ZUR BILDUNG LANGGESTRECKTER, BANDFÖRMIGER KÖRPER UND ZUR HERSTELLUNG VON BACKPRODUKTEN**
DEVICE AND METHOD FOR FORMING ELONGATED, BAND-SHAPED BODIES AND FOR PRODUCING BAKED GOODS
DISPOSITIF ET PROCÉDÉ POUR FORMER DES CORPS ALLONGÉS EN FORME DE BANDE ET POUR FABRIQUER DES PRODUITS DE BOULANGERIE

(30) Priorität: 15.01.2013 AT 292013
(43) Veröffentlichungstag der Anmeldung: 25.11.2015
(73) Patentinhaber: Haas Food Equipment GmbH, 1210 Wien (AT)
(72) Erfinder: HAAS, Johannes, 1040 Wien (AT); HAAS, Josef, 2100 Leobendorf (AT); JIRASCHEK, Christoph, Cep.: 82410-040 Curibita - Paraná (BR); JIRASCHEK, Stefan, 2202 Königsbrunn (AT)
(74) Vertreter: Puchberger & Partner Patentanwälte
(86) Internationale Anmeldenummer: PCT/EP2014/050608
(87) Internationale Veröffentlichungsnummer: WO 2014/111383

(56) Entgegenhaltungen:
- EP-A2- 2 380 441
- WO-A1-03/077670
- DE-A1- 10 355 347
- DE-A1-102006 041 301
- US-A- 4 217 083
- US-A- 5 223 296
- US-B1- 6 450 796

## Beschreibung

Die Erfindung betrifft eine Vorrichtung und ein Verfahren zur Bildung langgestreckter, bandförmiger Körper aus einer pumpfähigen, scherkraftsensiblen Masse, die in einem Backofen zu Backprodukten gebacken werden. Ferner betrifft die Erfindung eine Anordnung mehrerer erfindungsgemäßer Vorrichtungen sowie eine Backanlage umfassend eine erfindungsgemäße Vorrichtung und/oder eine erfindungsgemäße Anordnung. Das Verfahren betrifft die Herstellung langgestreckter bandförmiger Körper aus einer pumpfähigen, scherkraftsensiblen Masse zur Bildung von Backprodukten umfassend folgende Schritte: die Masse wird durch eine Pumpvorrichtung in einen Pumpenaustrittsbereich gefördert, wobei der Volumenstrom der Masse im Pumpenaustrittsbereich ein Geschwindigkeitsprofil aufweist und der Volumenstrom der Masse anschließend in einem Teilungsbereich in mehrere Teilvolumenströme aufgeteilt wird.

Vorrichtungen zur Bildung langgestreckter, bandförmiger Körper zur Herstellung essbarer Produkte sind seit langer Zeit bekannt und dem Stand der Technik zu entnehmen.

Herkömmliche Vorrichtungen und Verfahren sind beispielweise aus der EP 2 380 441 A2, der US 4 217 083 A, der US 6 450 796 B1 und der US 5 223 296 A bekannt.

Beispielsweise sind zur Produktion von Teigwaren, wie beispielsweise langgestreckte Nudeln, Vorrichtungen bekannt, bei denen eine Pumpvorrichtung einen festen Nudelteig verdichtet und in einen rohrförmigen Körper pumpt. Am Ende dieses rohrförmigen Körpers sind im Wesentlichen plane Scheiben mit Öffnungen vorgesehen, wobei die Öffnungen der Querschnittsform der zu extrudierenden Nudelprodukte entsprechen. Die Öffnungen weisen scharfe Kanten auf, um den zu bildenden Nudelkörper von dem Teig abzuschneiden. Die derart gebildeten Nudelstränge werden in weiterer Folge abgelängt und getrocknet, wobei die Konsistenz des Nudelteigs schon vor der Trocknung relativ trocken und fest ist, sodass die Gefahr eines Verklebens der einzelnen Nudelstränge nicht gegeben ist.

Zur Bildung von dünnen, langgestreckten Backprodukten, wie beispielsweise Salzstangen, Brotsticks, Blätterteigsticks, etc. sind Vorrichtungen bekannt, bei denen der Teig unter Druck in einen Pufferspeicher geleitet wird. Von diesem Pufferspeicher gehen mehrere Kanäle aus, die zur Bildung von langgestreckten Teigsträngen eingerichtet sind. In weiterer Folge werden die ausgegebenen Teigstränge auf ein bewegtes Transportband gelegt, um beispielsweise zu einer Schneidvorrichtung und weiter zu einem Backofen gefördert zu werden. Bei dem Austritt der Teigstränge ist es zwingend notwendig, dass alle Teigstränge dieselbe Austrittsgeschwindigkeit aufweisen, die in einem exakten Verhältnis zu der Fördergeschwindigkeit des Förderbandes steht. Grund dafür ist, dass durch Geschwindigkeitsunterschiede einzelner Teigstränge eine Dehnung oder Stauchung dieses Teigstrangs bewirkt wäre.

Bei der industriellen Herstellung von Backprodukten ist gleichbleibende Qualität von großer Wichtigkeit. Auch geringste Geschwindigkeitsunterschiede beim Austritt aus der Vorrichtung zur Bildung der langgestreckten, bandförmigen Körper würde die Qualität des Backproduktes beeinträchtigen.

Zu diesem Zweck sind dem Stand der Technik Vorrichtungen zu entnehmen, bei denen durch Stellelemente die Reibung und somit die Austrittsgeschwindigkeit in jedem Austrittskanal einzeln eingestellt werden kann. Nachteil an dieser Konstruktion ist, dass diese Einstellung je nach Viskosität des Teiges unterschiedlich sein muss. Bei einer Abänderung der Backrezeptur oder bei geringen Schwankungen der Teigzusammensetzung kommt es somit vor, dass die Geschwindigkeitseinstellung der Kanäle neu vorgenommen werden muss.

Dem Stand der Technik sind auch Vorrichtungen zur Bildung von Teigsträngen bekannt, bei denen Teig über einen Abstreifer von einer relativ großen Riffelwalze abgestriffen und in einen länglichen Spalt geleitet wird. Entlang dieses Spaltes sind nebeneinander Kanäle zur Bildung einzelner Teigstränge angeordnet. Jedoch ist das Vorsehen dieser Riffelwalzen, die sich über die gesamte Breite der Anlagen erstrecken, sehr aufwändig. Darüber hinaus kommt es insbesondere in den Randbereichen der Spalten zu unterschiedlichen Strömungsverhältnissen, was in weiterer Folge wiederum zu unterschiedlichen Austrittsgeschwindigkeiten und zur Beeinträchtigung der Qualität führt.

Herkömmliche Vorrichtungen sind beispielsweise aus der US 4 217 083 A, EP 2 380 441 A2, US 6 450 796 B1 und der US 5 223 296 A bekannt. Die US 4 217 083 A zeigt einen Kopf eines Extruders welcher scharfe Kanten umfasst. Die EP 2 380 441 A2 umfasst ebenfalls scharfe Kanten, wobei zusätzlich die Eintrittsöffnungen der Düsenkanäle von unterschiedlichen Geschwindigkeitsbereichen der zu diesen Eintrittsöffnungen geförderten Masse abzweigen, womit auch die Austrittsgeschwindigkeiten der unterschiedlichen Massenstränge voneinander abweichen. Die US 6 450 796 B1 zeigt eine Drehantrieb-Formdüsen-Maschine für einen Extruder mit einer drehbaren Düse mit mindestens drei Öffnungen welche ebenfalls scharfe Kanten umfassen. Die US 5 223 296 A zeigt eine Vorrichtung und ein Verfahren um Extrudate zu bilden, wobei die Vorrichtung ebenfalls scharfe Kanten umfasst.

Ein weiterer Faktor, der Einfluss auf die Qualität der Backprodukte und der langgestreckten bandförmigen Körper hat, ist die Scherkraftsensibilität der Masse. Die Masse, z.B. ein Teig, wird zur Bildung der langgestreckten Körper zuerst durch einen größeren Pumpenaustrittsquerschnitt aus der Pumpe und anschließend in einen kleineren Austrittsquerschnitt gefördert. Erfolgt diese Reduktion beispielsweise um scharfe Kanten, wie sie bei der Nudelproduktion bekannt ist, so findet durch die hohen Scherkräfte eine Veränderung der Konsistenz des Teiges statt. Dies führt bei Massen zur Bildung von Backprodukten zu einer Verschlechterung der Qualität.

Noch stärker sind die Auswirkungen, wenn unterschiedliche Teigstränge unterschiedlicher Öffnungen unterschiedlichen Scherkräften ausgesetzt sind. Wird z.B. ein Teigstrang im Wesentlichen entlang einer geraden Achse reduziert und ein weiterer um mehrere Kanten umgelenkt, so weicht die Konsistenz des einen Teigstranges von der Konsistenz des weiteren Teigstranges ab. Darüber hinaus ist durch die unterschiedliche Umlenkung die Reibung in den Kanälen unterschiedlich, was wiederum in unterschiedlichen Austrittsgeschwindigkeiten resultiert.

Zur Bildung langgestreckter, bandförmiger Körper, die in weiterer Folge einen Backprozess durchlaufen sollen, müssen die Teigstränge, also die Körper, auf eine Transportfläche nebeneinanderliegend abgelegt werden. Gemäß dem Stand der Technik werden dazu die Kanäle zur Bildung der Teigstränge in Form von Bohrungen derart ausgebildet, dass alle Austrittsöffnungen nebeneinander in einer Reihe liegen. Von dort aus erstrecken sich dann die Teigstränge auf ein Förderband.

Da langgestreckte, bandförmige Körper zur Bildung von Backprodukten eine Konsistenz aufweisen, die als weich klebrig bis teigig bezeichnet werden kann, ist es von großer Wichtigkeit, dass bei Austritt die einzelnen Teigstränge voneinander getrennt auf der Förderfläche abgelegt werden.

Somit besteht ein Zielkonflikt zur industriellen Herstellung langgestreckter, bandförmiger Körper aus pumpfähigen, scherkraftsensiblen Massen zur Bildung von Backprodukten, da die Kanäle zur Bildung der Teigstränge im Wesentlichen gleich ausgeführt sein müssen, um die Problematik der unterschiedlichen Scherkräfte sowie der unterschiedlichen Austrittsgeschwindigkeit zu vermeiden. Jedoch müssen andererseits alle Teigstränge nebeneinander auf die ebene Förderfläche abgelegt werden. Darüber hinaus sollen Pumpen zum Einsatz kommen, die kompakt, zuverlässig und einfach in ihrer Konstruktion sind. Gleichzeitig soll auch noch eine Flexibilität der herstellbaren Produkte gegeben sein. Beispielsweise sollten je nach Anforderung stangenförmige oder spiralförmige Produkte herstellbar sein. Darüber hinaus ist bei der industriellen Herstellung ein hoher Durchsatz bei gleichbleibender Qualität wichtig.

Aufgabe der Erfindung ist es nun, die Nachteile des Standes der Technik zu überwinden und eine Vorrichtung zur Bildung langgestreckter, bandförmiger Körper aus pumpfähigen scherkraftsensiblen Massen zur Bildung von Backprodukten zu schaffen, die einfach im Aufbau, flexibel in der Verwendung des Teiges und wartungsoptimiert ist sowie die Herstellung qualitativ hochwertiger Backprodukte mit konstanter, gleichbleibender Qualität erlaubt.

Die erfindungsgemäßen Aufgaben werden durch die Vorrichtung nach Anspruch 1 gelöst. Weitere erfindungsgemäße Merkmale können sein, dass die Teilungselemente im Wesentlichen radiärsymmetrisch und/oder punktsymmetrisch um den Schwerpunkt der Querschnittsfläche des Teilungsbereichs angeordnet sind und/oder dass die Teilungselemente entlang von Symmetrieachsen der Querschnittsfläche des Teilungsbereichs angeordnet sind, dass alle Teilungsöffnungen im Teilungsbereich den gleichen Flächeninhalt aufweisen und/oder kongruent sind, dass die Teilungselemente stegförmig und/oder keilförmig ausgeführt sind.

Ferner ist die Erfindung gegebenenfalls dadurch gekennzeichnet, dass die Teilungskanäle im Wesentlichen der Strömungsrichtung der Masse im Pumpenaustrittsbereich folgend ausgeführt sind und/oder dass die Strömungsrichtung der Masse in den Massenaustrittsöffnungen im Wesentlichen der Strömungsrichtung der Masse im Pumpenaustrittsbereich entspricht, dass die Pumpvorrichtung als Extruder ausgeführt ist, dass der Pumpenaustrittsbereich einen im Wesentlichen kreisrunden Querschnitt aufweist, dass im Bereich der Massenaustrittöffnungen Drehdüsen vorgesehen sind oder dass die Drehdüsen die Massenaustrittsöffnungen umfassen und/oder dass zum Antrieb der Drehdüsen einer Gruppe von Massenaustrittsöffnungen ein Planetengetriebe vorgesehen ist.

Die erfindungsgemäße Anordnung kann dadurch gekennzeichnet sein, dass in Querrichtung der Transportfläche nebeneinander mehrere Vorrichtungen gemäß der vorangegangenen Beschreibung angeordnet sind.

Die erfindungsgemäße Backanlage, umfassend einen beheizten oder beheizbaren Backraum zum Backen langgestreckter, bandförmiger Körper aus einer pumpfähigen, scherkraftsensiblen Masse, kann dadurch gekennzeichnet sein, dass eine Vorrichtung oder eine Anordnung gemäß der vorangegangenen Beschreibung vorgesehen ist. Das erfindungsgemäße Verfahren zur Herstellung langgestreckter bandförmiger Körper aus einer pumpfähigen, scherkraftsensiblen Masse zur Bildung von Backprodukten umfasst die Merkmalen des Anspruchs 12.

Das erfindungsgemäße Verfahren kann auch dadurch gekennzeichnet sein, dass die Geschwindigkeitsprofile aller Teilmassenströme im Teilungsbereich und/oder in den Teilungsöffnungen gleich sind, dass die Teilvolumenströme der Masse kontinuierlich oder abschnittsweise von der Querschnittsfläche der Teilungsöffnungen auf die Querschnittsfläche der Massenaustrittsöffnungen reduziert werden und/oder dass die Teilvolumenströme der Masse durch Austrittsöffnungen hindurch gefördert werden und anschließend in Form von Freistrahlen durch die Schwerkraft Richtung Transportfläche geleitet werden.

Zur Lösung der erfindungsgemäßen Aufgaben und des beschriebenen Zielkonflikts umfasst die Erfindung eine Reihe von technischen Merkmalen, die zusammengenommen einen Synergie-Effekt ergeben, nämlich, dass die Qualität der bandförmigen Körper und der daraus gebildeten Backprodukte verbessert werden kann, dass diese Verbesserung unabhängig von Schwankungen der Teigkonsistenz erzielt wird und dass dabei die Vorrichtung einfach im Aufbau und wartungsfreundlich ist.

Zur Erörterung der Erfindung ist die Betrachtung der Strömungsverhältnisse in der erfindungsgemäßen Vorrichtung notwendig. Gemäß der Erfindung wird eine Masse von einer Pumpvorrichtung in einen Pumpenaustrittsbereich gefördert. Beispiele für Pumpenvorrichtungen sind beispielsweise Schneckenextruder, Doppelextruder, Zahnradpumpen, Zahnwalzenpumpen etc. Diese haben gemein, dass die Masse in einen Pumpenaustrittsbereich gefördert wird. Die Querschnittsfläche des Pumpenaustrittsbereichs weist bevorzugt eine kompakte Form auf. So ist bevorzugt die größte Breite der Querschnittsfläche maximal viermal so groß wie die kleinste Breite der Querschnittsfläche. In dem Pumpenaustrittsbereich weist die Masse eine gewisse Geschwindigkeit auf. Diese Geschwindigkeit ist jedoch über die Querschnittsfläche des Pumpenaustrittsbereichs nicht konstant. Vielmehr weist der Volumenstrom der Masse ein gewisses Geschwindigkeitsprofil auf. Üblicherweise sind die Geschwindigkeiten am Rand der Strömung durch die Reibung an den Wänden geringer. Die maximale Strömungsgeschwindigkeit liegt in der Regel im Mittelbereich der Querschnittsfläche des Pumpenaustrittsbereichs vor. Insbesondere liegt der Bereich der maximalen Geschwindigkeit des Volumenstroms im Bereich des Schwerpunktes der Querschnittsfläche im Pumpenaustrittsbereich. Bei ringförmigen Querschnittsflächen kann jedoch die maximale Geschwindigkeit auch entlang eines Kreises auftreten. Da manche Pumpvorrichtungen, wie beispielsweise Extruder, in unmittelbarer Nähe zur Schnecke kein 100% konstantes Geschwindigkeitsprofil aufweisen, wird als Geschwindigkeitsprofil im Sinne der Erfindung ein über die Zeit gemitteltes Geschwindigkeitsprofil, insbesondere ein über mehrere Umdrehungen der Fördermittel der Pumpvorrichtung gemitteltes Geschwindigkeitsprofil bezeichnet.

Zur Verbesserung der Konstruktion wird gemäß der Erfindung vorgeschlagen, pro Pumpenvorrichtung mehrere Austrittsöffnungen vorzusehen. Dazu wird der Volumenstrom der Masse in einem Teilungsbereich in mehrere Teilvolumenströme aufgeteilt. Um qualitativ hochwertige bandförmige Körper zu erhalten, müssen alle Teilströme denselben Teilvolumenstrom aufweisen. Darüber hinaus müssen auch die Scherkräfte, die auf die geförderte Masse wirken, in jedem Teilvolumenstrom im Wesentlichen dieselben sein. Dazu ist es notwendig, dass insbesondere alle Teilvolumenströme im Wesentlichen dieselben Geschwindigkeitsprofile aufweisen. Um dies über eine bestmögliche Bandbreite an unterschiedlichen Viskositäten von Massen erzielen zu können, wird gemäß der vorliegenden Erfindung das Geschwindigkeitsprofil im Pumpenaustrittsbereich durch Teilungselemente in gleiche Teile aufgeteilt. Üblicherweise liegt ein symmetrisches, insbesondere rotationssymmetrisches oder radiärsymmetrisches Geschwindigkeitsprofil vor. Dieses Geschwindigkeitsprofil ist insbesondere von der Form des Pumpenaustrittskanals oder der Querschnittsfläche im Pumpenaustrittsbereich abhängig. In der Regel bildet sich jedoch eine Art eines parabolischen Geschwindigkeitsprofils aus. Um nun konstante, gleiche Teilvolumenströme zu erhalten, sind Teilungselemente vorgesehen, die derart angeordnet sind, dass gleiche Bereiche des Volumenstroms und/oder des Geschwindigkeitsprofils abgezweigt werden. Insbesondere sind die Teilungselemente radiärsymmetrisch und/oder punktsymmetrisch um den Schwerpunkt der Querschnittsfläche des Teilungsbereichs angeordnet. Ferner können die Teilungselemente auch entlang von Symmetrieachsen der Querschnittsfläche des Teilungsbereichs angeordnet sein.

Bei einem runden Pumpenaustrittsbereich, wie beispielsweise bei einem einfachen Extruder, ist der nachgeordnete Teilungsbereich beispielsweise ebenfalls rund ausgeführt. Das gemittelte Geschwindigkeitsprofil entspricht im Wesentlichen einer Parabel. Um in gleiche Geschwindigkeitsprofile aufzuteilen, sind die Teilungselemente entlang von Symmetrieachsen und/oder symmetrisch in der Querschnittsfläche des Teilungsbereichs verteilt. Durch die Teilungselemente sind dazwischen liegende Teilungsöffnungen gebildet. Diese Teilungsöffnungen sind an Teilungskanäle angeschlossen, welche sich weiter bis zu den Massenaustrittsöffnungen erstrecken. In vorteilhafter Weise weisen alle Teilungsöffnungen dieselbe Fläche auf.

Um die erfindungsgemäßen Aufgaben zu lösen, müssen bevorzugt auch die Teilungskanäle und die Teilungselemente derart geformt werden, dass die bandförmigen Körper gleichbleibende Qualität aufweisen. Dazu müssen einerseits alle Teilungskanäle im Wesentlichen dieselbe Form und dieselbe Länge aufweisen. Andererseits müssen die Teilungselemente derart ausgebildet sein, dass die Scherkräfte bei der Umlenkung oder Teilung der Masse und/oder des Volumenstroms der Masse im Wesentlichen gleich sind.

Dazu werden die Teilvolumenströme der Förderrichtung der Pumpenvorrichtung folgend, nahezu geradlinig weitergefördert. Bei einer symmetrischen Anordnung der Teilungselemente und einer im Wesentlichen geradlinigen Weiterführung der Teilvolumenströme und der gleichen Ausgestaltung aller Teilungskanäle führt dies zu im Wesentlichen entlang eines Kreises angeordneten Austrittsöffnungen. Jedoch müssen die Austrittsöffnungen nicht entlang eines Kreises angeordnet sein, um die erfindungsgemäßen Aufgeben zu lösen.

Jedoch ist es gemäß der Aufgabe der Erfindung notwendig, dass die bandförmigen Körper nebeneinander auf eine bewegte Transportfläche abgelegt werden. Dazu ist es nun notwendig, dass die Austrittsöffnungen in Querrichtung der Transportfläche einen Abstand zueinander aufweisen. Somit weisen die Austrittsöffnungen in lotrechter Richtung keine Überschneidung auf. Die bandförmigen Körper treten im Wesentlichen als Freistrahl aus den Austrittsöffnungen aus und werden durch die Schwerkraft Richtung bewegter Transportfläche geleitet. Die Schwerkraft kann beispielsweise normal zur Transportfläche wirken. Jedoch ist auch eine gewisse Neigung der Transportfläche möglich. Ist der Kontakt mit der Transportfläche hergestellt, so werden die bandförmigen Körper, die eine gewisse Viskosität aufweisen, auch von der Fördergeschwindigkeit der Transportfläche beeinflusst. Bevorzugt weisen die einzelnen bandförmigen Körper, die aus den einzelnen Teilvolumenströmen gebildet werden, auf der Transportfläche eine im Wesentlichen konstante Teilung auf und/oder weisen die einzelnen Körper auf der Transportfläche einen Abstand zueinander auf.

Zu diesem Zweck sind die Massenaustrittsöffnungen in Querrichtung der Transportfläche nebeneinander angeordnet. Dies bedeutet nicht zwingend, dass die Massenaustrittsöffnungen entlang einer Geraden angeordnet sind. So kann zusätzlich zur seitlichen Beabstandung in Querrichtung der Transportfläche eine Beabstandung der Austrittsöffnungen normal zur Transportfläche, insbesondere in Schwerkraftrichtung vorgesehen sein. Beispielsweise können die Massenaustrittsöffnungen derart versetzt entlang eines Kreises angeordnet sein, sodass die auf der Transportfläche abgelegten bandförmigen Körper einen gewissen Abstand und/oder eine gewisse Teilung aufweisen. Anders ausgedrückt sind die Massenaustrittsöffnungen derart angeordnet, dass sie in Schwerkraftsrichtung keine Überschneidung aufweisen.

In weiterer Folge werden die beabstandet zueinander auf der Transportfläche abgelegten langgestreckten, bandförmigen Körper weiter verarbeitet. Weitere Verarbeitungsschritte können beispielsweise sein: Ablängen auf eine gewünschte Länge, Besprühen mit Stoffen wie beispielsweise Laugen, etc., Durchführen durch ein Laugenbad, Bestreuen mit Streugut wie beispielsweise Getreide, Salz oder Gewürzen, und/oder Prägen zur Verformung der bandförmigen Körper.

Ferner werden die Körper in einem Backofen gebacken. Dazu ist es von Vorteil, wenn die Austrittsgeschwindigkeit der bandförmigen Körper im Wesentlichen der Geschwindigkeit des Backbandes des Backofens entspricht. Ferner ist es von Vorteil, wenn der Backofen eine Steuerungseinheit aufweist, die mit der Steuerungseinheit der erfindungsgemäßen Vorrichtung bzw. der erfindungsgemäße Anordnung gekoppelt und/oder synchronisiert ist. Alternativ können der Backofen und die erfindungsgemäße Vorrichtung bzw. die erfindungsgemäße Anordnung eine einzige Steuerungseinheit aufweisen. Bevorzugt ist eine Synchronisation der Fördergeschwindigkeiten im Backofen mit der Fördergeschwindigkeit der erfindungsgemäßen Vorrichtung vorgesehen.

Gemäß einer optionalen Ausführungsform der Erfindung können im Bereich der Massenaustrittsöffnungen Drehdüsen vorgesehen sein. Diese Drehdüsen weisen bevorzugt Massenaustrittsöffnungen mit Querschnittsflächen auf, die von einer Kreisform abweichen. Durch Drehung der Massenaustrittsöffnungen werden beispielsweise helixförmige, spiralförmige oder drehschlangenförmige Körper erzeugt. Grundsätzlich gelten jedoch auch für diese Ausführungsform dieselben Parameter bezüglich der Strömungsverhältnisse und dieselben Mittel zur Lösung der erfindungsgemäßen Aufgaben. Insbesondere sollen in jedem einzelnen Massenaustrittsbereich und/oder in jeder einzelnen gedrehten Massenaustrittsöffnung im Wesentlichen dieselben Strömungsverhältnisse vorliegen.

In weiterer Folge wird die Erfindung anhand konkreter Ausführungsbeispiele weiter beschrieben.
Fig. 1 zeigt eine Schrägansicht einer erfindungsgemäßen Vorrichtung und einer erfindungsgemäßen Anordnung, wobei Teile der erfindungsgemäßen Backanlage abgeschnitten, bzw. nicht dargestellt sind.
Fig. 2 zeigt eine schematische Schnittdarstellung einer möglichen Ausführungsform der erfindungsgemäßen Vorrichtung.
Fig. 3 zeigt eine weitere Ausführungsform einer erfindungsgemäßen Vorrichtung.
Fig. 4 zeigt eine schematische Darstellung einer Drehdüsenanordnung.
Fig. 5 zeigt ein Detail einer Ausführungsform einer erfindungsgemäßen Vorrichtung.
Fig. 6 zeigt eine Schrägansicht einer möglichen Ausführungsform der Teilungselemente.
Fig. 7 zeigt eine Schrägansicht mit teilweiser Schnittdarstellung einer erfindungsgemäßen Ausführung eines Details der Vorrichtung.
Fig. 8a zeigt eine schematische Darstellung der Anordnung von Austrittsöffnungen und Teilungen mit vier Austrittsöffnungen.
Fig. 8b zeigt eine schematische Ansicht eines Ausführungsbeispiels mit fünf Austrittsöffnungen.
Fig. 8c zeigt eine Ausführungsform mit 7 Austrittsöffnungen,
Fig. 8d zeigt eine Ausführungsform mit 9 Austrittsöffnungen.

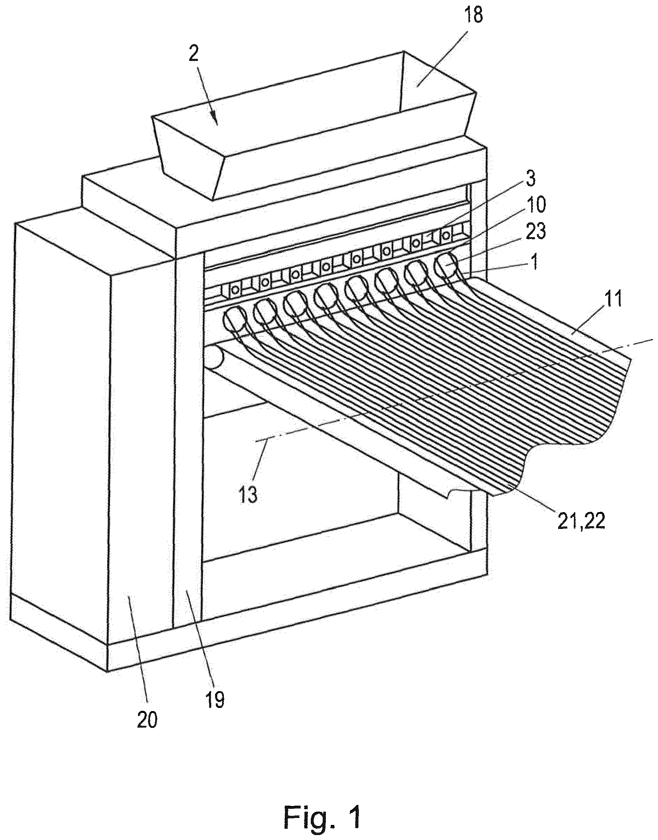

Fig. 1 zeigt eine erfindungsgemäße Vorrichtung und insbesondere eine erfindungsgemäße Anordnung von acht nebeneinander angeordneten Vorrichtungen.

Die Vorrichtung bzw. die Anordnung umfasst einen Massenbehälter 18 zur Zuführung und/oder Speicherung einer Masse 2. Ferner umfasst die Anordnung ein Grundgestell 19 sowie eine Transportfläche 11, die in der vorliegenden Ausführung als Bandförderer ausgeführt ist. Dabei wird ein Transportband um zumindest zwei Rollen umgelenkt und angetrieben. Die Vorrichtung und/oder die Anordnung umfasst Massenaustrittsöffnungen 10 zum Austritt der Masse 2 in Form von langgestreckten, bandförmigen Körpern 1.

Ferner ist eine Steuerungseinheit 20 vorgesehen. Diese Steuerungseinheit 20 ist gegebenenfalls oder bevorzugt mit der Steuerungseinheit der Backanlage gekoppelt und/oder synchronisiert.

Die auf der Transportfläche 11 abgelegten Körper 1 weisen einen gewissen Abstand 22 bzw. eine gewisse Teilung 21 auf. Auf diese beiden Abstandsparameter wird in den Beschreibungen der nachfolgenden Figuren weiter eingegangen.

Die Massenaustrittsöffnungen 10 sind in Gruppen 23 von Massenaustrittsöffnungen 10 zusammengefasst. Pro Gruppe 23 ist in bevorzugter Weise eine Pumpenvorrichtung 3 vorgesehen. In der vorliegenden Ausführungsform sind acht Gruppen 23 von Massenaustrittsöffnungen 10 vorgesehen.

Die Körper 1 treten im Wesentlichen als Freistrahl aus den Massenaustrittsöffnungen 10 aus. Erst bei Kontakt mit der Transportfläche 11 kommt es zur Anlage mit einem weiteren festen Bestandteil der erfindungsgemäßen Vorrichtung und zum Weitertransport der Körper 1.

Die bandförmigen Körper weisen eine gewisse Teilung 21 und einen gewissen Abstand 22 zueinander auf. Dieser Abstand ist als Abstand in Querrichtung 13 der Transportfläche 11 definiert. Die Transportfläche weist eine Förderrichtung auf, die im Wesentlichen dem dargestellten Verlauf der bandförmigen Körper 1 entspricht. Normal auf diese Richtung und parallel zur Transportfläche 11 ist die Querrichtung 13 definiert. Die Teilung bzw. der Abstand der einzelnen Körper 1 wird insbesondere durch die Positionierung der Massenaustrittsöffnungen 10 bewirkt. Um eine erfindungsgemäße Teilung und/oder einen erfindungsgemäßen Abstand zu bewirken, sind die Massenaustrittsöffnungen derart positioniert, dass sie in Querrichtung 13 der Förderfläche 11 einen gewissen Abstand zueinander aufweisen und/oder in lotrechter Richtung keine Überschneidung aufweisen. Die lotrechte Richtung entspricht der Richtung der Schwerkraft - in der dargestellten Ausführungsform beispielsweise einer Geraden, die in der Ebene der Austrittsöffnungen liegt und vertikal verläuft.

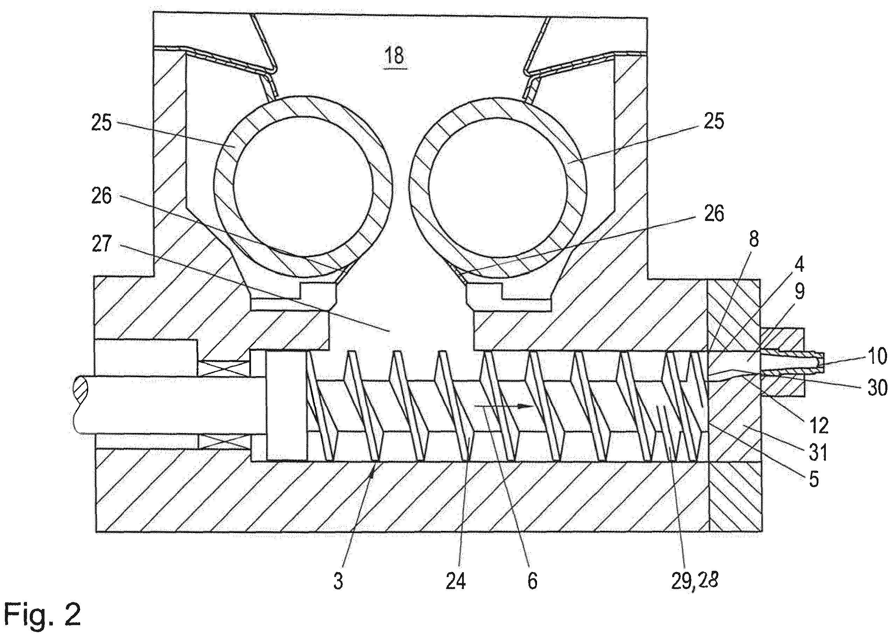

Fig. 2 zeigt eine schematische Schnittdarstellung einer erfindungsgemäßen Vorrichtung. Dargestellt sind unter anderem der Massenbehälter 18 zur Speicherung bzw. Zuführung einer Masse 2, zwei Walzen 25, die vorgesehen sind, um die Masse 2 von dem Massenbehälter 18 Richtung Pumpvorrichtung 3 zu fördern. Dazu sind an die Walzen anliegende Abstreifer 26 vorgesehen. In einer bevorzugten Ausführungsform drehen sich die Walzen gegengleich, sodass die Bewegungsrichtung an den einander zugewandten Seiten der Walzen 25 Richtung Pumpvorrichtung 3 orientiert ist. Dadurch wird die Masse 2 aus dem Massenbehälter 18 mitgenommen und an den Abstreifern 26 abgestreift. Ferner umfasst die Vorrichtung eine Zuführöffnung 27 zur Zuführung der Masse 2 in die Pumpvorrichtung 3. Die Pumpvorrichtung 3 umfasst Fördermittel 24. Diese Fördermittel 24 sind dazu eingerichtet die Masse 2 in Strömungsrichtung 6 zu fördern und gegebenenfalls zu komprimieren.

In der vorliegenden Ausführungsform ist die Pumpvorrichtung 3 als Extruder ausgebildet. Dazu ist eine Extruderschnecke 28 vorgesehen, die durch eine Rotation um ihre Längsachse zur Förderung der Masse 2 eingerichtet ist. In der Nähe des Pumpenaustrittsbereichs 4 weist die Extruderschnecke einen Verdichtungsbereich 29 auf. Ferner weist die Pumpvorrichtung 3 in ihrem Pumpenaustrittsbereich 4 eine Querschnittsfläche 30 auf. In der vorliegenden Ausführungsform ist die Querschnittsfläche 30 des Pumpenaustrittsbereichs 4 im Wesentlichen ringförmig. Grund dafür ist, dass die Welle der Extruderschnecke im Teilungsbereich 5 direkt an den Teilungskörper 31 angelegt ist. Gemäß der vorangegangenen Beschreibung wird beim Teilungskörper 31, insbesondere im Teilungsbereich, der Volumenstrom der Masse 2 in mehrere gleiche Teilvolumenströme aufgeteilt. In der vorliegenden Darstellung sind lediglich eine Massenaustrittsöffnung 10 und lediglich ein Teilungskanal 9 dargestellt. Jedoch sind gemäß der Erfindung in bevorzugter Weise mehrere Teilungsöffnungen 8, Teilungskanäle 9 und Massenaustrittsöffnungen 10 pro Pumpvorrichtung vorgesehen. Der Teilungskanal 9 umfasst einen oder mehrere Reduzierbereiche 12, in welchen der Teilungskanal 9 von dem Querschnitt der Teilungsöffnung 8 auf die Größe der Massenaustrittsöffnung 10 reduziert und/oder verringert wird. Gemäß der Erfindung ist/sind in bevorzugter Weise der Reduzierbereich 12 oder die Reduzierbereiche 12 als sich stetig, kontinuierlich oder verlaufend reduzierender Kanal ausgeführt.

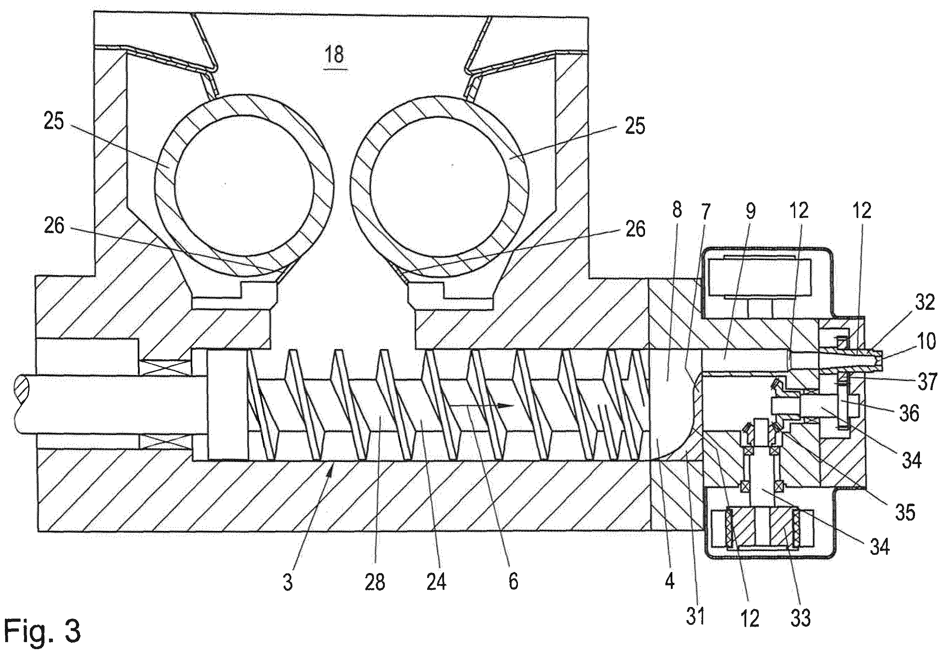

Fig. 3 zeigt eine weitere Ausführungsform einer erfindungsgemäßen Vorrichtung. Dabei sind wiederum ein Massenbehälter 18 und zwei Walzen 25 mit jeweils einem Abstreifer 26 vorgesehen. Analog zur Ausführungsform der Fig. 2 ist eine Extruderschnecke 28 als Fördermittel 24 der Pumpvorrichtung 3 vorgesehen. Diese ist wiederum dazu eingerichtet, die Masse 2 in Strömungsrichtung 6 zu fördern.

Anschließend an den Pumpenaustrittsbereich 4 sind der Teilungsbereich 5 und Teilungselemente 7 vorgesehen, durch welche Teilungsöffnungen 8 und Teilungskanäle 9 gebildet sind. Insbesondere sind die Teilungselemente 7 Bestandteile des Teilungskörpers 31.

Der Teilungskanal 9 weist in seinem Verlauf bis zur Massenaustrittsöffnung 10 einen oder mehrere Reduzierbereiche 12 auf. In der vorliegenden Ausführungsform sind Drehdüsen 32 vorgesehen. Diese sind über ein Antriebsrad 33, eine Welle 34, ein Getriebe 35, eine weitere Welle 34, ein Sonnenrad 36 eines Planetengetriebes und ein Planetenrad 37 des Planetengetriebes angetrieben. Das Planetenrad 37 ist drehbar angetrieben und dreht die Drehdüse 32. Durch die Drehung können beispielsweise helixförmige Körper geformt werden.
In der vorliegenden Ausführungsform ist wiederum nur eine Massenaustrittsöffnung 10 dargestellt. Jedoch sind bevorzugt mehrere Massenaustrittsöffnungen vorgesehen, die jedoch in der gewählten Schnittdarstellung nicht sichtbar sind. Beispielsweise sind die Massenaustrittsöffnungen 10 entlang eines Kreises um die Drehachse des Sonnenrades 36 des Planetengetriebes angeordnet. Somit kann durch ein Sonnenrad die Drehung mehrerer Planetenräder 37 und mehrerer Drehdüsen 32 bewirkt werden.

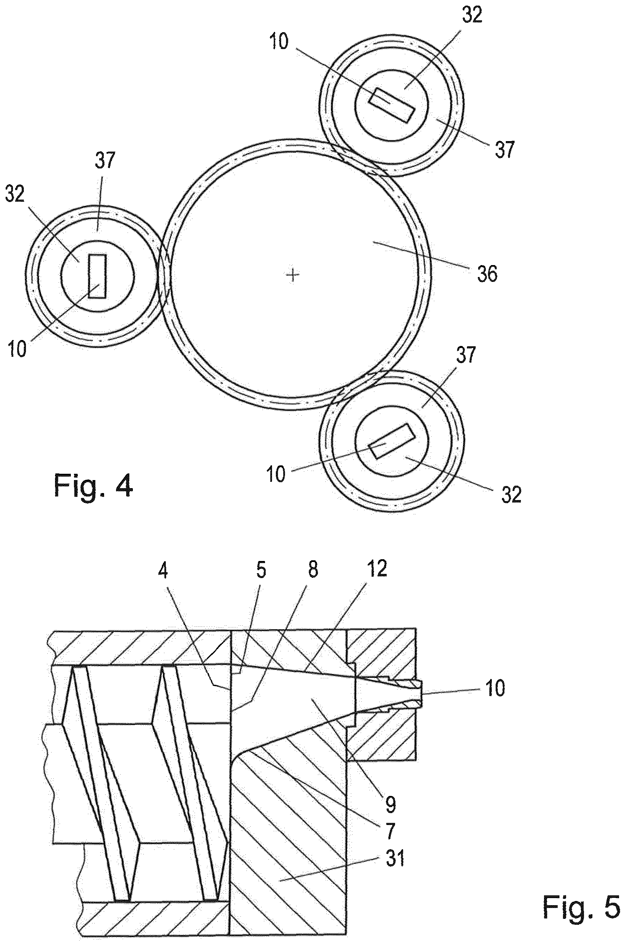

Fig. 4 zeigt eine schematische Ansicht des Planetengetriebes beinhaltend ein Sonnenrad 36, drei Planetenräder 37 und drei Drehdüsen 32 mit jeweils einer Massenaustrittsöffnung 10. Die Massenaustrittsöffnungen haben in dieser Ausführungsform rechteckige Querschnitte. Insbesondere weisen die Querschnitte der Massenaustrittsöffnungen 10 bei Drehdüsen 32 eine Form auf, die von der Form eines Kreises abweicht.

Fig. 5 zeigt ein Detail der erfindungsgemäßen Vorrichtung im Pumpenaustrittsbereich 4. Diesem Bereich nachgeordnet bzw. direkt an diesen Bereich angeschlossen befindet sich der Teilungsbereich 5. Im Teilungsbereich 5 ist ein Teilungskörper 31 vorgesehen. Dieser umfasst Teilungselemente 7 durch welche Teilungsöffnungen 8 sowie ein Abschnitt der Teilungskanäle 9 gebildet sind. Ferner umfasst die Vorrichtung Massenaustrittsöffnungen 10. Die Teilungskanäle 9 bzw. der Teilungskanal 9 weisen einen oder mehrere Reduzierbereiche 12 auf. In der vorliegenden Ausführungsform ist im Wesentlichen ein Reduzierbereich 12 vorgesehen, der sich über weite Teile des Teilungskanals 9 erstreckt. Dabei wird die Querschnittsfläche des Teilungskanals 9 von der Größe der Teilungsöffnung 8 auf die Größe der Massenaustrittsöffnung 10 reduziert. Besonders bei scherkraftsensiblen Massen zur Bildung von Backprodukten, ist eine Massen schonende Reduzierung des Querschnitts notwendig. Dies wird dadurch erzielt, dass die Reduzierung im Wesentlichen kontinuierlich oder stetig erfolgt.

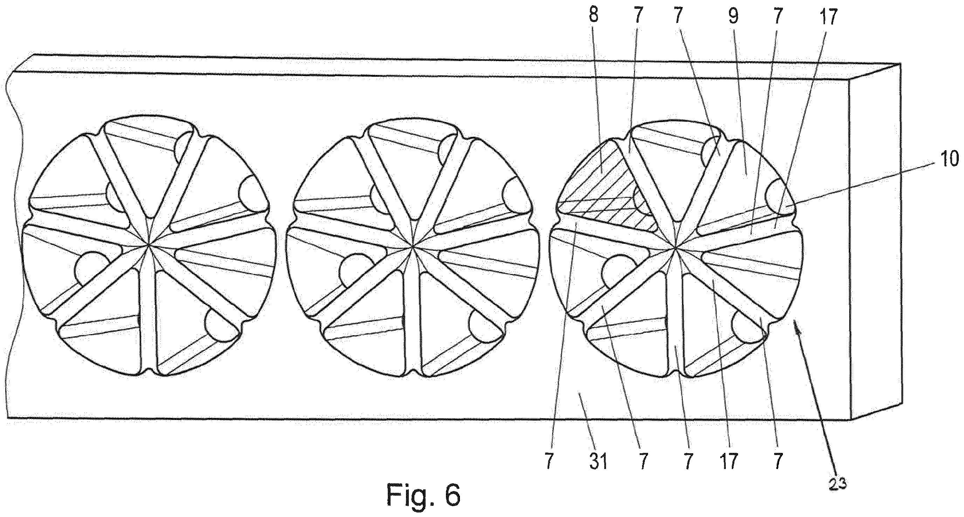

Fig. 6 zeigt eine schematische Darstellung einer Ausführungsform eines Teilungskörpers 31. Die Ansicht ist dabei auf jene Seite gerichtet, von welcher die Masse 2 in die Teilungsöffnungen 8 gepumpt wird. In der Darstellung der Fig. 6 sind drei Gruppen 23 von Massenaustrittsöffnungen 10 dargestellt. Pro Gruppe 23 und pro radiärsymmetrischer Teilungselementeanordnung ist bevorzugt eine Pumpvorrichtung 3 vorgesehen. Diese Pumpvorrichtung 3 ist in der Darstellung ausgeblendet.

Durch Teilungselemente 7 sind Teilungsöffnungen 8 sowie Abschnitte der Teilungskanäle 9 gebildet. Zur darstellungsmäßig besseren Kennzeichnungen ist eine der Teilungsöffnungen 8 schraffiert dargestellt. Die Teilungsöffnung entspricht im Wesentlichen jener Fläche, die zwischen den Teilungselementen 7 im Teilungsbereich 5 aufgespannt ist. Die Teilungselemente 7 weisen jeweils einen Kamm 17 auf, der gegen die Strömungsrichtung der Masse gerichtet ist. Die Teilungskanäle sind im Wesentlichen stegförmig ausgebildet. Ferner verlaufen die Teilungskanäle in der vorliegenden Ausführungsform radiärsymmetrisch, entlang von Symmetrieachsen des Pumpenaustrittsquerschnitts und/oder rotationssymmetrisch. Gemäß der vorangegangenen Beschreibung sind alle Teilungsöffnungen 8 im Wesentlichen gleich groß. Die Teilungskanäle 9 erstrecken sich von den Teilungsöffnungen 8 zu den Massenaustrittsöffnungen 10. In der vorliegenden Ausführungsform ist im Verlauf des Teilungskanals 9 der Reduzierbereich 12 vorgesehen.

Die in Fig. 6 dargestellte Ausführungsform umfasst sieben Teilungsöffnungen 8, sieben Teilungskanäle 9 sowie sieben Massenaustrittsöffnungen 10 pro Gruppe 23 und/oder pro Pumpvorrichtung 3.

Die Teilungselemente 7 sind im Wesentlichen keilförmig ausgeführt und weisen an ihren, der Strömungsrichtung entgegengerichteten Seiten einen Kamm 17 auf. Der Kamm 17 verläuft stegförmig im Teilungsbereich, sodass Teilungsöffnungen gebildet sind. Zur Reduzierung der auf die Masse wirkenden Scherkräfte sind die Kämme 17 abgerundet ausgeführt. Dadurch wird im Teilungsbereich der Teig schonend in Teilvolumenströme aufgeteilt. Durch die keilförmige Ausgestaltung der Teilungselemente 7 sind die Reduzierbereiche der Teilungskanäle gebildet.

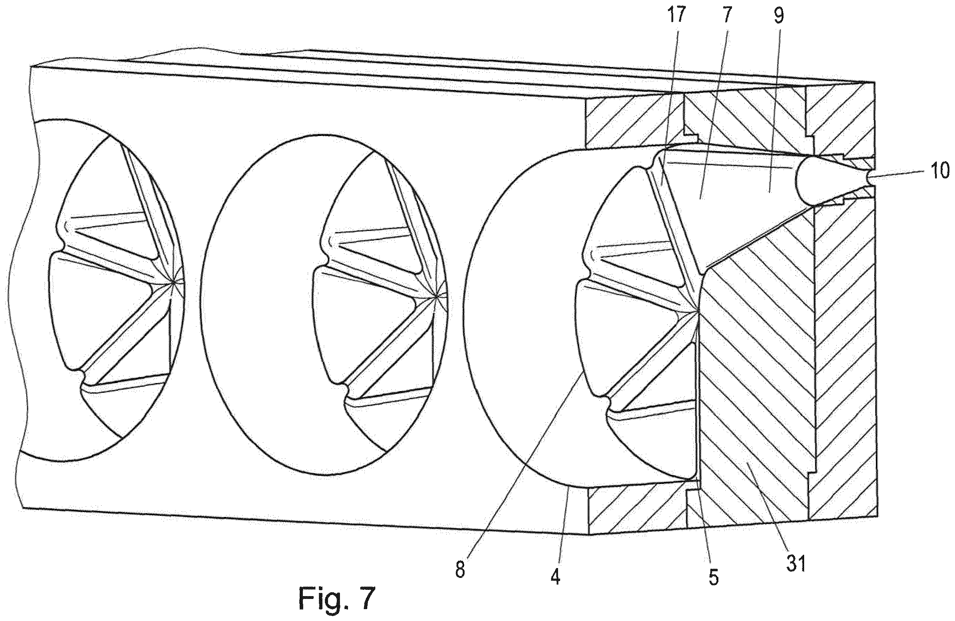

Fig. 7 zeigt eine weitere Ausführungsform eines Details der erfindungsgemäßen Vorrichtung und/oder der erfindungsgemäßen Anordnung. Dabei ist dem Pumpenaustrittsbereich 4 in einem gewissen Abstand der Teilungsbereich 5 nachgeordnet. Vom Teilungsbereich 5 Richtung Austrittsöffnung 10 erstrecken sich Teilungselemente 7, welche Teilungsöffnungen 8 und Teilungskanäle 9 bilden. Wie in der vorangegangenen Beschreibung sind die Teilungselemente 7 derart ausgeführt, dass sie jeweils einen Kamm 17 aufweisen, der gegen die Strömungsrichtung der Masse 2 gerichtet ist. Dieser Kamm ist insbesondere stegförmig, bevorzugt abgerundet ausgeführt. Durch die Teilungselemente wird eine schonende Aufteilung der scherkraftsensiblen Massen auf die einzelnen Teilungskanäle bewirkt. Dabei ist zu beachten, dass der Volumenstrom, die Scherkräfte und die Reibungsverhältnisse in jedem Teilungskanal im Wesentlichen dieselben sind.

Gemäß der Ausführungsform der Fig. 7 ist der Teilungskörper 31 als eigenständiger Körper ausgeführt, welcher von der Vorrichtung getrennt werden kann, um beispielsweise die Teilungselemente zu reinigen. Jedoch entspricht es ebenfalls dem Erfindungsgedanken, wie in weiteren Ausführungsformen dargestellt, den Teilungskörper 31 derart auszugestalten, dass dieser die Austrittsöffnungen 10, den Pumpenaustrittsquerschnitt sowie den Teilungsquerschnitt umfasst.

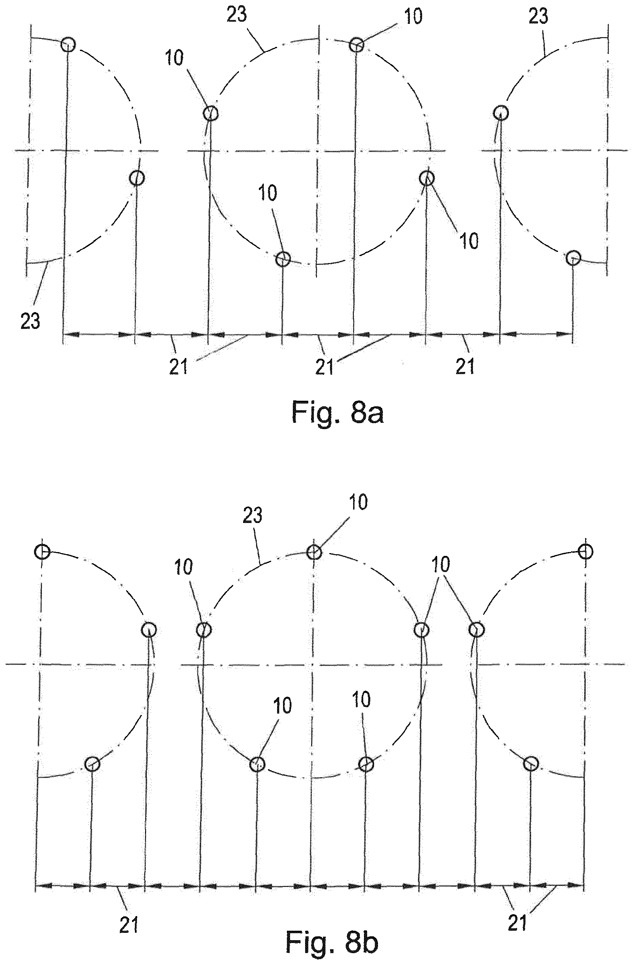

Fig. 8a zeigt eine schematische Darstellung einer möglichen Positionierung der Massenaustrittsöffnungen 10. Jede Gruppe 23 von Massenaustrittsöffnungen 10 umfasst in der vorliegenden Ausführungsform vier Massenaustrittsöffnungen 10. Diese weisen in Querrichtung der Transportfläche einen gewissen Abstand und insbesondere eine gewisse Teilung 21 auf. Der Abstand der einzelnen bandförmigen Körper entspricht dabei der Teilung abzüglich der Dicke eines Körpers. In der vorliegenden Darstellung entspricht die Richtung der Aneinanderreihung der Teilungspfeile 21 einer Richtung, die der Querrichtung 13 der Transportfläche entspricht. Die Austrittsrichtung der Masse aus den Massenaustrittsöffnungen 10 verläuft im Wesentlichen projizierend.

Fig. 8b zeigt eine weitere Ausführungsform, wobei pro Gruppe 23 fünf Massenaustrittsöffnungen 10 vorgesehen sind. Dabei sind die Massenaustrittsöffnungen 10 derart angeordnet, dass sie in Querrichtung 13 der Transportfläche eine konstante Teilung 21 und/oder einen Abstand aufweisen.

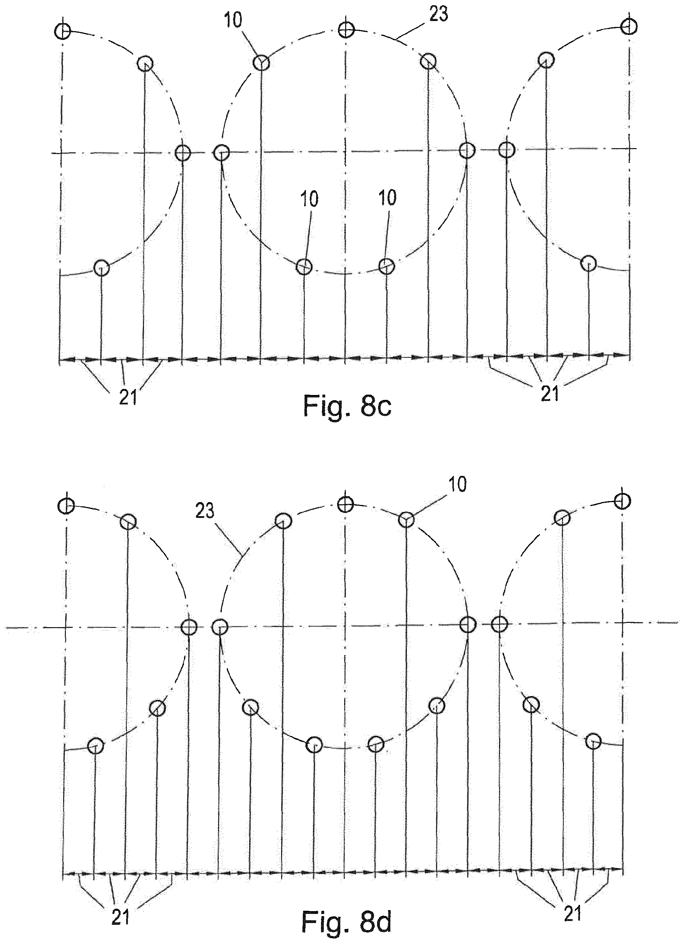

Fig. 8c zeigt eine weitere Ausführungsform der erfindungsgemäßen Vorrichtung in einer schematischen Ansicht, wobei jede Gruppe 23 sieben Massenaustrittsöffnungen 10 umfasst. Diese sind derart angeordnet, dass eine konstante Teilung 21 und/oder ein konstanter Abstand in Querrichtung 13 der Transportfläche erzielt wird.

Fig. 8d zeigt eine weitere Ausführungsform, bei der pro Gruppe 23 neun Massenaustrittsöffnungen 10 vorgesehen sind.

Die unterschiedlichen Ausführungsformen sind miteinander kombinierbar. So entspricht es dem Erfindungsgedanken ein, zwei, drei, vier, fünf, sechs, sieben, acht, neun, zehn, elf, zwölf, dreizehn oder mehr Massenaustrittsöffnungen pro Pumpvorrichtung 3 und/oder pro Gruppe 23 vorzusehen. Dabei ist darauf zu achten, dass die Austrittsöffnungen 10 in lotrechter Richtung keine Überschneidung aufweisen und/oder dass die austretenden bandförmigen Körper einen gewissen Abstand und/oder eine gewisse Teilung auf der Transportfläche aufweisen. Dazu können die Austrittsöffnungen entlang eines Kreises vorgesehen sein. Ferner können die Massenaustrittsöffnungen jedoch auch beliebig positioniert sein mit der Einschränkung, dass sie entweder in lotrechter Richtung keine Überschneidung aufweisen oder dass die auf der Transportfläche abgelegten Körper einen gewissen Abstand zueinander aufweisen. Ferner ist gemäß der Erfindung von großer Wichtigkeit, dass die Volumenströme der durch die einzelnen Massenaustrittsöffnungen 10 austretenden Massen und/oder Körper gleich sind.

Kombinationen unterschiedlicher Ausführungsformen sind ebenfalls möglich. So können beide Ausführungsformen der Fig. 2 und der Fig. 3 Teilungskörper gemäß der Fig. 5, Fig. 6 oder Fig. 7 umfassen. Die Teilungskörper der Fig. 5, 6 und 7 können dabei Anordnungen der Massenaustrittsöffnungen gemäß den Fig. 8a, 8b, 8c und 8d sowie weitere erfindungsgemäße Positionierungen aufweisen. Die Masse tritt aus den Massenaustrittsöffnungen in allen Ausführungsformen bevorzugt im Wesentlichen waagrecht aus. Auch die Extruderschnecke ist in allen Ausführungsformen bevorzugt im Wesentlichen waagrecht liegend angeordnet.

### Bezugszeichenliste:

- 1: Körper
- 2: Masse
- 3: Pumpvorrichtung
- 4: Pumpenaustrittsbereich
- 5: Teilungsbereich
- 6: Strömungsrichtung
- 7: Teilungselemente
- 8: Teilungsöffnung
- 9: Teilungskanal
- 10: Massenaustrittsöffnung
- 11: Transportfläche
- 12: Reduzierbereich
- 13: Querrichtung (der Transportfläche)
- 17: Kamm
- 18: Massenbehälter
- 19: Grundgestell
- 20: Steuerungseinheit
- 21: Teilung
- 22: Abstand
- 23: Gruppe von Massenaustrittsöffnungen
- 24: Fördermittel der Pumpvorrichtung
- 25: Walze
- 26: Abstreifer
- 27: Zuführöffnung in die Pumpvorrichtung
- 28: Extruderschnecke
- 29: Verdichtungsbereich
- 30: Querschnittsfläche
- 31: Teilungskörper
- 32: Drehdüse
- 33: Antriebsrad
- 34: Welle
- 35: Getriebe
- 36: Sonnenrad
- 37: Planetenrad

## Patentansprüche

1. Vorrichtung zur Bildung langgestreckter, bandförmiger Körper (1) aus einer pumpfähigen, scherkraftsensiblen Masse (2) zur Bildung von Backprodukten umfassend:
- eine Pumpvorrichtung (3) zur Förderung der Masse (2) in einen Pumpenaustrittsbereich (4),
- einen Teilungsbereich (5), der dem Pumpenaustrittsbereich (4) in Strömungsrichtung (6) nachgeordnet ist, wobei im Teilungsbereich (5) mehrere durch Teilungselemente (7) begrenzte Teilungsöffnungen (8) vorgesehen sind,
- mehrere voneinander getrennte Teilungskanäle (9), die von den Teilungsöffnungen (8) bis zu Massenaustrittöffnungen (10) führen,
- eine bewegte Transportfläche (11) zum Abtransport der aus den Massenaustrittöffnungen (10) austretenden bandförmigen Körpern (1)
**dadurch gekennzeichnet,**
- **dass** die Teilungskanäle (9) einen kontinuierlich zusammenlaufenden Reduzierbereich (12) umfassen,
**dass** die Massenaustrittsöffnungen (10) in Querrichtung (13) der Transportfläche (11) einen Abstand zueinander aufweisen,
- **dass** die Teilungselemente (7) gegen die Strömungsrichtung der Masse (2) gerichtete Kämme (17) umfassen, und
- **dass** die Kämme (17) gegen die Strömungsrichtung abgerundet ausgeführt sind.

2. Vorrichtung nach Anspruch 1 **dadurch gekennzeichnet, dass** die Teilungselemente im Wesentlichen radiärsymmetrisch und/oder punktsymmetrisch um den Schwerpunkt der Querschnittsfläche des Teilungsbereichs angeordnet sind und/oder dass die Teilungselemente entlang von Symmetrieachsen der Querschnittsfläche des Teilungsbereichs angeordnet sind.

3. Vorrichtung nach Anspruch 1 oder 2, **dadurch gekennzeichnet, dass** alle Teilungsöffnungen (8) im Teilungsbereich (5) den gleichen Flächeninhalt aufweisen und/oder kongruent sind.

4. Vorrichtung nach einem der Ansprüche 1 bis 3, **dadurch gekennzeichnet, dass** die Teilungselemente (7) stegförmig und/oder keilförmig ausgeführt sind.

5. Vorrichtung nach einem der Ansprüche 1 bis 4, **dadurch gekennzeichnet, dass** die Teilungskanäle (9) im Wesentlichen der Strömungsrichtung (6) der Masse (2) im Pumpenaustrittsbereich (4) folgend ausgeführt sind und/oder dass die Strömungsrichtung (6) der Masse (2) in den Massenaustrittsöffnungen (10) im Wesentlichen der Strömungsrichtung der Masse (2) im Pumpenaustrittsbereich (4) entspricht.

6. Vorrichtung nach einem der Ansprüche 1 bis 5, **dadurch gekennzeichnet, dass** die Pumpvorrichtung als Extruder ausgeführt ist.

7. Vorrichtung nach einem der Ansprüche 1 bis 6, **dadurch gekennzeichnet, dass** der Pumpenaustrittsbereich (4) einen im Wesentlichen kreisrunden Querschnitt aufweist.

8. Vorrichtung nach einem der Ansprüche 1 bis 7, **dadurch gekennzeichnet, dass** im Bereich der Massenaustrittöffnungen (10) Drehdüsen (32) vorgesehen sind oder, dass die Drehdüsen (32) die Massenaustrittsöffnungen (10) umfassen.

9. Vorrichtung nach Anspruch 8, **dadurch gekennzeichnet, dass** zum Antrieb der Drehdüsen einer Gruppe (23) von Massenaustrittsöffnungen (10) ein Planetengetriebe vorgesehen ist.

10. **Anordnung, dadurch gekennzeichnet, dass** in Querrichtung (13) der Transportfläche (11) nebeneinander mehrere Vorrichtungen nach einem der vorangegangenen Ansprüchen angeordnet sind.

11. **Backanlage,** umfassend einen beheizten oder beheizbaren Backraum zum Backen langgestreckter, bandförmiger Körper aus einer pumpfähigen, scherkraftsensiblen Masse, **dadurch gekennzeichnet, dass** eine Vorrichtung oder eine Anordnung nach einem der vorangegangenen Ansprüche vorgesehen ist.

12. **Verfahren** zur Herstellung langgestreckter bandförmiger Körper (1) aus einer pumpfähigen, scherkraftsensiblen Masse (2) zur Bildung von Backprodukten, umfassend folgende Schritte:
- die Masse (2) wird durch eine Pumpvorrichtung (3) in einen Pumpenaustrittsbereich (4) gefördert, wobei der Volumenstrom der Masse (2) im Pumpenaustrittsbereich (4) ein Geschwindigkeitsprofil aufweist,
- der Volumenstrom der Masse (2) wird anschließend in einem Teilungsbereich (5) in mehrere Teilvolumenströme aufgeteilt, wobei im Teilungsbereich (5) mehrere Teilungselemente (7) vorgesehen sind, durch welche Teilungsöffnungen (8) und Teilungskanäle (9) gebildet sind, wobei sich die Teilungskanäle (9) von Teilungsöffnungen (8) zu Massenaustrittsöffnungen (10) erstrecken,
**dadurch gekennzeichnet,**
- **dass** alle Teilvolumenströme gleich groß sind,
- **dass** die Körper (1) nebeneinander mit einem Abstand auf einer bewegten Transportfläche (11) abgelegt werden,
- **dass** die Austrittsgeschwindigkeiten aller austretenden Körper (1) gleich groß sind,
- und **dass** die Teilungselemente (7) im Teilungsbereich (5) derart ausgestaltet sind, dass die in den Teilungskanälen (9) auf die Masse (2) wirkenden Scherkräfte in jedem Teilungskanal (9) im Wesentlichen gleich sind.

13. Verfahren nach Anspruch 12, **dadurch gekennzeichnet, dass** die Geschwindigkeitsprofile aller Teilmassenströme im Teilungsbereich (5) und/oder in den Teilungsöffnungen (8) gleich sind.

14. Verfahren nach Anspruch 12 oder 13, **dadurch gekennzeichnet, dass** die Teilvolumenströme der Masse (2) kontinuierlich oder abschnittsweise von der Querschnittsfläche der Teilungsöffnungen (8) auf die Querschnittsfläche der Massenaustrittsöffnungen (10) reduziert werden.

15. Verfahren nach einem der Ansprüche 12 bis 14, **dadurch gekennzeichnet, dass** die Teilvolumenströme der Masse (2) durch Austrittsöffnungen (10) hindurch gefördert werden und anschließend in Form von Freistrahlen durch die Schwerkraft Richtung Transportfläche (11) geleitet werden.

## Claims

1. A device for forming elongated, strip-shaped bodies (1) made of a pumpable mass (2) which is sensitive to shear forces, for forming baked products, comprising:
- a pump device (3) for conveying the mass (2) into a pump outlet region (4),
- a dividing region (5) which is arranged downstream of the pump outlet region (4) in the flow direction (6), wherein a plurality of dividing openings (8) which are defined by dividing elements (7) are provided in the dividing region (5),
- a plurality of dividing channels (9) which are separate from one another and which lead from the dividing openings (8) to the mass outlet openings (10),
- a moving transport surface (11) for transporting the strip-shaped bodies (1) emerging from the mass outlet openings (10),
**characterised**
- **in that** the dividing channels (9) comprise a continuously narrowing reduction region (12),
- **in that** the mass outlet openings (10) are spaced apart from one another in the transverse direction (13) of the transport surface (11),
- **in that** the dividing elements (7) comprise combs (17) which are oriented counter to the flow direction of the mass (2), and
- **in that** the combs (17) are designed to be rounded counter to the flow direction.

2. The device according to claim 1, **characterised in that** the dividing elements are arranged substantially radially symmetrically and/or point-symmetrically about the centroid of the cross-sectional surface of the dividing region and/or **in that** the dividing elements are arranged along axes of symmetry of the cross-sectional surface of the dividing region.

3. The device according to claim 1 or 2, **characterised in that** all of the dividing openings (8) in the dividing region (5) have the same surface area and/or are congruent.

4. The device according to one of claims 1 to 3, **characterised in that** the dividing elements (7) are designed to be rib-shaped and/or wedge-shaped.

5. The device according to one of claims 1 to 4, **characterised in that** the dividing channels (9) are substantially designed to follow the flow direction (6) of the mass (2) in the pump outlet region (4) and/or **in that** the flow direction (6) of the mass (2) in the mass outlet openings (10) substantially corresponds to the flow direction of the mass (2) in the pump outlet region (4).

6. The device according to one of claims 1 to 5, **characterised in that** the pump device is designed as an extruder.

7. The device according to one of claims 1 to 6, **characterised in that** the pump outlet region (4) has a substantially circular cross section.

8. The device according to one of claims 1 to 7, **characterised in that** rotary nozzles (32) are provided in the region of the mass outlet openings (10) or **in that** the rotary nozzles (32) comprise the mass outlet openings (10).

9. The device according to claim 8, **characterised in that** a planetary gear mechanism is provided for driving the rotary nozzles of a group (23) of mass outlet openings (10).

10. An arrangement, **characterised in that** a plurality of devices according to one of the preceding claims are arranged adjacent to one another in the transverse direction (13) of the transport surface (11) .

11. A baking system comprising a heated or heatable baking chamber for baking elongated strip-shaped bodies made of a pumpable mass which is sensitive to shear forces, **characterised in that** a device or an arrangement according to one of the preceding claims is provided.

12. A method for producing elongated, strip-shaped bodies (1) made of a pumpable mass (2) which is sensitive to shear forces, for forming baked products, comprising the following steps:
- the mass (2) is conveyed by a pump device (3) into a pump outlet region (4), wherein the volume flow of the mass (2) in the pump outlet region (4) has a speed profile,
- the volume flow of the mass (2) is subsequently divided in a dividing region (5) into a plurality of partial volume flows, wherein a plurality of dividing elements (7) are provided in the dividing region (5), dividing openings (8) and dividing channels (9) being formed thereby, wherein the dividing channels (9) extend from dividing openings (8) to mass outlet openings (10),
**characterised**
- **in that** all of the partial volume flows are of equal size,
- **in that** the bodies (1) are deposited adjacent to one another and at a distance from one another on a moving transport surface (11),
- **in that** the outlet speeds of all emerging bodies (1) are of equal size,
- and **in that** the dividing elements (7) in the dividing region (5) are designed such that the shear forces acting in the dividing channels (9) on the mass (2) are substantially equal in each dividing channel (9) .

13. The method according to claim 12, **characterised in that** the speed profile of all of the partial mass flows in the dividing region (5) and/or in the dividing openings (8) are equal.

14. The method according to claim 12 or 13, **characterised in that** the partial volume flows of the mass (2) are continuously or sectionally reduced from the cross-sectional surface of the dividing openings (8) to the cross-sectional surface of the mass outlet openings (10).

15. The method according to one of claims 12 to 14, **characterised in that** the partial volume flows of the mass (2) are conveyed through outlet openings (10) and are subsequently conducted in the form of free jets due to gravitational force in the direction of the transport surface (11).

## Revendications

1. Dispositif, destiné à former des corps (1) allongés en forme de bandes, à partir d'une masse (2) pompable, sensible à la force de cisaillement, pour créer des produits de boulangerie, comprenant :
- un dispositif de pompage (3) destiné à convoyer la masse (2) dans une zone de sortie de la pompe (4),
- une zone de division (5), qui est placée en aval de la zone de sortie de la pompe (4) dans la direction d'écoulement (6), dans la zone de division (5) étant prévus plusieurs orifices diviseurs (8) délimités par des éléments diviseurs (7),
- plusieurs canaux diviseurs (9) séparés les uns des autres, qui mènent des orifices diviseurs (8) jusqu'à des orifices de sortie de la masse (10),
- une surface de transport (11) en mouvement pour l'évacuation des corps (1) en forme de bandes sortant des orifices de sortie de la masse (10)
**caractérisé**
- **en ce que** les canaux diviseurs (9) comprennent une zone de réduction (12) continuellement convergente,
- **en ce que** dans la direction transversale (13) de la surface de transport (11), les orifices de sortie de la masse (10) présentent un écart mutuel,
- **en ce que** les éléments diviseurs (7) comportent des peignes (17) orientés à l'encontre de la direction d'écoulement de la masse (2) et
- **en ce qu'**à l'encontre de la direction d'écoulement, les peignes (17) sont réalisés en étant arrondis.

2. Dispositif selon la revendication 1, **caractérisé en ce que** les éléments diviseurs sont placés sensiblement en symétrie radiaire et/ou en symétrie ponctuelle autour du barycentre de la surface de section transversale de la zone de division et/ou **en ce que** les éléments diviseurs sont placés le long d'axes de symétrie de la surface de section transversale de la zone de division.

3. Dispositif selon la revendication 1 ou 2, **caractérisé en ce que** tous les orifices diviseurs (8) dans la zone de division (5) présentent la même aire surfacique et/ou sont congruents.

4. Dispositif selon l'une quelconque des revendications 1 à 3, **caractérisé en ce que** les éléments diviseurs (7) sont conçus en forme de barrette et/ou de forme conique.

5. Dispositif selon l'une quelconque des revendications 1 à 4, **caractérisé en ce que** les canaux diviseurs (9) sont réalisés en suivant sensiblement la direction d'écoulement (6) de la masse (2) dans la zone de sortie de la pompe (4) et/ou **en ce que** la direction d'écoulement (6) de la masse (2) dans les orifices de sortie de la masse (10) correspond sensiblement à la direction d'écoulement de la masse (2) dans la zone de sortie de la pompe (4).

6. Dispositif selon l'une quelconque des revendications 1 à 5, **caractérisé en ce que** le dispositif de pompage est conçu sous la forme d'une extrudeuse.

7. Dispositif selon l'une quelconque des revendications 1 à 6, **caractérisé en ce que** la zone de sortie de la pompe (4) présente une section transversale sensiblement circulaire.

8. Dispositif selon l'une quelconque des revendications 1 à 7, **caractérisé en ce que** dans la zone des orifices de sortie de la masse (10) sont prévues des buses rotatives (32) ou **en ce que** les buses rotatives (32) englobent les orifices de sortie de la masse (10).

9. Dispositif selon la revendication 8, **caractérisé en ce que** pour l'entraînement des buses rotatives d'un groupe (23) d'orifices de sortie de la masse (10) est prévu un engrenage planétaire.

10. Agencement, **caractérisé en ce que** dans la direction transversale (13) de la surface de transport (11) sont placés côte à côte plusieurs dispositifs selon l'une quelconque des revendications précédentes.

11. Installation de cuisson au four, comprenant un espace de cuisson chauffé ou susceptible d'être chauffé, pour la cuisson de corps allongés en forme de bandes à partir d'une masse pompable, sensible aux forces de cisaillement, **caractérisée en ce qu'**il est prévu un dispositif ou un agencement selon l'une quelconque des revendications précédentes.

12. Procédé, destiné à former des corps (1) allongés en forme de bandes à partir d'une masse (2) pompable, sensible à la force de cisaillement, pour créer des produits de boulangerie, comprenant les étapes suivantes :
- la masse (2) est convoyée par un dispositif de pompage (3) dans la zone de sortie de la pompe (4), le débit volumétrique de la masse (2) présentant un profil de vitesse,
- dans une zone de division (5), le débit volumétrique de la masse (2) est ensuite divisé en plusieurs flux volumétriques partiels, dans la zone de division (5) étant prévus plusieurs éléments diviseurs (7) à travers lesquels sont formés des orifices diviseurs (8) et des canaux diviseurs (9), les canaux diviseurs (9) s'étendant des orifices diviseurs (8) vers les orifices de sortie de la masse (10),
**caractérisé**
- **en ce que** tous les flux volumétriques sont de même grandeur,
- **en ce qu'**on pose les corps (1) côté à côte avec un écart sur une surface de transport (11) en mouvement,
- **en ce que** les vitesses de sortie de tous les corps (1) sortant sont identiques,
- et **en ce que** dans la zone de division (5), les éléments diviseurs (7) sont conçus de telle sorte que les forces de cisaillement agissant sur la masse (2) dans les canaux diviseurs (9) sont sensiblement identiques dans chaque canal diviseur (9).

13. Procédé selon la revendication 12, **caractérisé en ce que** les profils de vitesse de tous les flux volumétriques partiels dans la zone de division (5) et/ou dans les orifices diviseurs (8) sont identiques.

14. Procédé selon la revendication 12 ou 13, **caractérisé en ce que** les flux volumétriques partiels de la masse (2) sont réduits en continu ou par sections par la surface de section transversale des orifices diviseurs (8) sur la surface de direction transversale des orifices de sortie de la masse (10).

15. Procédé selon l'une quelconque des revendications 12 à 14, **caractérisé en ce que** les flux volumétriques partiels de la masse (2) sont convoyés à travers des orifices de sortie (10) et sont ensuite dirigés sous la forme de jets libre, par la gravité dans la direction de la surface de transport (11).
